Europäisches Patentamt

European Patent Office

Office européen des brevets

(11) Veröffentlichungsnummer: **0 218 045**
**B1**

(12) # EUROPÄISCHE PATENTSCHRIFT

(45) Veröffentlichungstag der Patentschrift:
**13.12.89**

(51) Int. Cl.⁴: **B60T 13/38**, B60T 17/18

(21) Anmeldenummer: **86111062.5**

(22) Anmeldetag: **11.08.86**

(54) Druckmittelbetätigte Bremsanlage eines Fahrzeugs.

(30) Priorität: **09.10.85 DE 3535973**

(43) Veröffentlichungstag der Anmeldung:
**15.04.87 Patentblatt 87/16**

(45) Bekanntmachung des Hinweises auf die Patenterteilung:
**13.12.89 Patentblatt 89/50**

(84) Benannte Vertragsstaaten:
**AT DE FR GB IT SE**

(56) Entgegenhaltungen:
**DE-A- 2 258 212**
**FR-A- 2 354 227**

(73) Patentinhaber: **WABCO Westinghouse Fahrzeugbremsen GmbH, Am Lindener Hafen 21 Postfach 91 12 80, D-3000 Hannover 91(DE)**

(72) Erfinder: **Pannbacker, Helmut, Dipl.-Ing., Bruchweg 30, D-3005 Hemmingen 5(DE)**

(74) Vertreter: **Schrödter, Manfred, WABCO Westinghouse Fahrzeugbremsen GmbH Am Lindener Hafen 21 Postfach 91 12 80, D-3000 Hannover 91(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine druckmittelbetätigte Bremsanlage eines Fahrzeugs gemäß dem Oberbegriff des Patentanspruchs 1.

Eine derartige Bremsanlage ist aus der DE-A 2 258 212, dort insbesondere Fig. 4 rechts der gestrichelten senkrechten Linie, bekannt. In dieser Bremsanlage werden der Druckmittelvorrat für die Betriebsbremsanlage, nachstehend Betriebsbremsvorrat genannt, und der Druckmittelvorrat für die Federspeicherbremsanlage, nachstehend Federspeichervorrat genannt, parallel aus der Vorratsleitung versorgt. Die genannten Vorräte sind nicht miteinander verbunden, da sie gegen eine Querströmung untereinander gesichert sind. Infolgedessen können bei dieser Bremsanlage ein hoher Luftverbrauch und der damit einhergehende Druckabfall in der Betriebsbremsanlage nicht zu einem ungewollten Ansprechen der Federspeicherbremsanlage führen. Das zur Steuerung der Federspeicherbremsanlage dienende Relaisventil ist bei der bekannten Bremsanlage von druckübersetzender Bauart und steuerseitig an die Vorratsleitung angeschlossen. Bauartbedingt steuert dieses Relaisventil schon bei geringem Druck in der Vorratsleitung einen relativ hohen Druck aus dem Federspeichervorrat zum Federspeicherbremszylinder aus. Umgekehrt kann infolge der Bauart des Relaisventils der Druck in der Vorratsleitung relativ weit abfallen, bevor der Druck im Federspeicherbremszylinder auf dessen Lösedruck abfällt. Dadurch ist diese Bremsanlage auch im Falle eines Druckabfalls in der Vorratsleitung weitgehend gegen ein ungewolltes Ansprechen der Federspeicherbremsanlage, welches kritische Fahrzustände verursachen kann, gesichert.

Andererseits hat der hohe zum Ansprechen der Federspeicherbremsanlage vorausgesetzte Abfall de Drucks in der Vorratsleitung bei der bekannten Bremsanlage den Nachteil, daß zur abstufbaren Betätigung der Federspeicherbremsanlage nur ein geringer Bereich des Drucks in der Vorratsleitung zur Verfügung steht. Die Federspeicherbremsanlage dieser Bremsanlage kann daher kaum feinfühlig betätigt werden und ist deshalb als Hilfsbremse nicht geeignet.

Der Erfindung liegt deshalb die Aufgabe zugrunde, eine Bremsanlage der eingangs genannten Art mit einfachen Mitteln derart zu verbessern, daß die darin enthaltene Federspeicherbremsanlage auch als Hilfsbremse einsetzbar ist.

Diese Aufgabe wird durch die im Patentanspruch 1 angegebene Erfindung gelöst. Weiterbildungen und vorteilhafte Ausgestaltungen sind in den Unteransprüchen angegeben.

In einer derartigen Bremsanlage dient die Betriebsbremsanlage in bekannter Weise der normalen betriebsmäßigen Abbremsung des Fahrzeugs, während die bei Druckabfall in der Vorratsleitung und/oder im Federspeichervorrat unter den Lösedruck des Federspeicherbremszylinders ansprechende Federspeicherbremsanlage bei gewolltem Druckabfall als Hilfsbremse und/oder als Feststellbremse und bei ungewolltem Druckabfall als selbsttätige Notbremse dient. Ein Druckabfall in der Vorratsleitung wird der Federspeicherbremsanlage über ein steuerseitig mit der Vorratsleitung verbundenes Relaisventil mitgeteilt. Eine derartige Bremsanlage ist auf allen Gebieten der Fahrzeugtechnik, z.B. bei Motorfahrzeugen, Omnibussen und bei Anhängern, verwendbar. Gewollt kann der zum Ansprechen der Federspeicherbremsanlage führende Druckabfall in der Vorratsleitung und/oder im Federspeichervorrat durch geeignete und bekannte Steuereinrichtungen wie Ventile herbeigeführt werden. Im Fall eines Anhängers können diese Steuereinrichtungen im Zugfahrzeug und/oder im Anhänger selbst vorgesehen sein.

Die Erfindung läßt sich vorteilhaft einsetzen, wenn der Betriebsbremsanlage eine Blockierschutzanlage zugeordnet ist, da eine solche in Regelphasen, insbesondere beim Befahren einer längeren Strecke mit niedrigem Kraftschlußbeiwert, einen besonders hohen Luftverbrauch seitens der Betriebsbremsanlage hervorruft.

Die Betriebsbremsanlage und/oder die Federspeicherbremsanlage können ein- oder mehrkreisig ausgebildet sein. Gegebenenfalls müssen der Betriebsbremsvorrat und/oder der Federspeichervorrat in getrennte Vorräte für die einzelnen Kreise aufgeteilt und in bekannter Weise untereinander gegen Druckverlust abgesichert werden.

Als Sperreinrichtung in der Steuerleitung des Relaisventils kommt jede in geeigneter Weise funktionierende bekannte Einrichtung in Betracht. In kostengünstiger und betriebssicherer Weise kann die Sperreinrichtung als Wegeventil oder als durch von einem an der Vorratsleitung anliegenden Druckschalter schaltbares Magnetventil ausgebildet sein.

Für eine Ausbildung der genannten Sperreinrichtung als Wegeventil bieten die Ausgestaltungen nach den Ansprüchen 3 und 4 besonders kostengünstige und betriebssichere Lösungen.

Durch die Anordnung eines Löseventils nach einem der Ansprüche 6, 8 oder 9 in der Zuleitung des Drucks in der Vorratsleitung zu der zugeordneten Steuereinrichtung des eben genannten Wegeventils bzw. durch die Anordnung eines Löseschalters im Stromkreis von Druckschalter und Magnetventil nach einem der Ansprüche 7 bis 9 kann sichergestellt werden, daß der Federspeicherbremszylinder, beispielsweise zum Manövrieren oder Abschleppen des Fahrzeugs, lösbar ist.

Als die Strömung aus dem Betriebsbremsvorrat (zum Federspeichervorrat) ermöglichende und die Gegenrichtung sperrende Vorrichtung kommt jede in geeigneter Weise wirkende Vorrichtung in Betracht. Kostengünstig und betriebssicher sind als derartige Vorrichtung insbesondere ein Rückschlagventil oder ein Überströmventil ohne Rückströmung einsetzbar.

Der direkt von der Vorratsleitung gespeiste Betriebsbremsvorrat kann gegen Druckabfall in der Vorratsleitung durch ein die Strömung zum Betriebsbremsvorrat ermöglichendes und die Gegenrichtung sperrendes Rückschlagventil gesichert werden.

Alle zur Durchführung der Erfindung erforderlichen Einrichtungen und Leitungen können diskret, aber auch in raumsparender und/oder kostengünstiger Weise insgesamt oder teilweise untereinander und/oder mit weiterem Zubehör der Bremsanlage zu Baugruppen vereinigt sein.

Die Erfindung wird nachstehend an Hand von in Zeichnungen dargestellten Ausführungsbeispielen erläutert. Dabei werden für Positionen mit gleichen Funktionen durchgehend gleiche Bezugszeichen verwendet.

Es zeigen

**Bremsanlage mit einer Sperreinrichtung,**

**Fig. 2**  }  jeweils einen Ausschnitt aus Fig. 1 mit
              einer jeweils anderen Ausgestaltung der
**Fig. 3**  }  Sperreinrichtung.

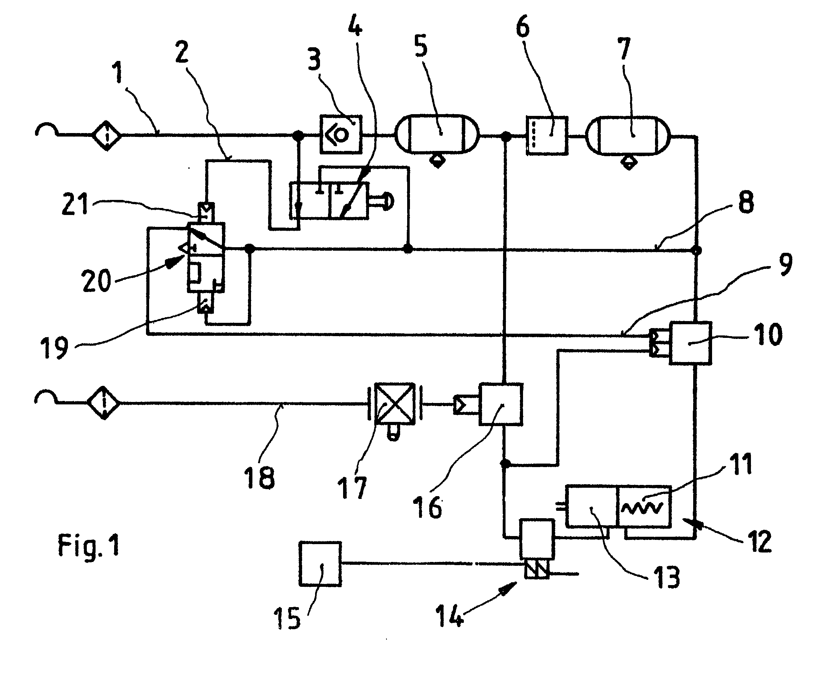

Fig. 1 zeigt schematisch eine druckmittelbetätigte (pneumatische) Bremsanlage mit einer Betriebsbremsanlage und einer Federspeicherbremsanlage, die aus einem Druckmittel-Vorratssystem 5, 7 versorgt werden. Das Druckmittel-Vorratssystem 5, 7 besteht aus einem Druckmittelvorrat für die Betriebsbremsanlage, nachstehend Betriebsbremsvorrat 5 genannt, und einem Druckmittelvorrat für die Federspeicherbremsanlage, nachstehend Federspeichervorrat 7 genannt. Das Druckmittel-Vorratssystem 5, 7 wird über eine Vorratsleitung 1 gespeist, die über ein Rückschlagventil 3 mit dem Betriebsbremsvorrat 5 verbunden ist. Der Federspeichervorrat 7 wird über eine Vorrichtung 6 aus dem Betriebsbremsvorrat 5 gespeist, wobei die Vorrichtung 6 eine Strömung vom Betriebsbremsvorrat 5 zum Federspeichervorrat 7 ermöglicht und eine Strömung in Gegenrichtung sperrt. Die Vorrichtung 6 ist als Rückschlagventil oder Überströmventil ohne Rückströmung ausgebildet und wird nachstehend als Rückschlagventil 6 in Bezug genommen.

Das Ausführungsbeispiel stellt eine Anhängerbremsanlage dar, die über die Vorratsleitung 1, welche in nicht näher bezeichneter Weise einen Kupplungskopf und einen Leitungsfilter aufweist, mit der Druckmittelbeschaffungsanlage eines Zugfahrzeugs verbindbar ist und deren aus einem Betriebsbremszylinder 13, einem lastabhängigen Bremskraftregler 17 und einem Bremsventil 16 bestehende Betriebsbremsanlage über eine Bremsleitung 18 pneumatisch steuerbar ist. Auch die Bremsleitung 18 weist in nicht näher bezeichneter Weise einen Kupplungskopf und einen Leitungsfilter auf. Der Betriebsbremsanlage ist eine Blockierschutzanlage 14, 15 zugeordnet, die durch ein Regelventil 14 und eine Regelelektronik 15 symbolisiert ist. Denkt man sich die Vorratsleitung direkt mit einer Luftbeschaffungsanlage verbunden und das Bremsventil unmittelbar von Fahrer betätigbar, so steht das Ausführungsbeispiel auch für die Bremsanlage eines anderen Fahrzeugs als eines Anhängers, beispielsweise eines Motorfahrzeugs oder eines Omnibusses.

Alle erwähnten Anlagen und Komponenten derselben sind für sich genommen und ihren vielfältigen Anordnungsmöglichkeiten untereinander bekannt.

Das Rückschlagventil 3 dient zur Sicherung des Betriebsbremsvorrats 5 gegen Druckabfall in der Vorratsleitung 1 und ist zu diesem Zweck in Richtung des Betriebsbremsvorrats 5 durchlässig und in Gegenrichtung undurchlässig.

Bei Betätigung der Betriebsbremsanlage wird der Betriebsbremszylinder 13 in bekannter Weise mit Druckluft aus dem Betriebsbremsvorrat 5 beaufschlagt, wobei die Blockierschutzanlage 14, 15 in ebenfalls bekannter Weise mitwirkt.

Die Federspeicherbremsanlage besteht aus einem Federspeicherbremszylinder 11, der in bekannter Weise aufgebaut ist und eine aus dem Federspeichervorrat 7 beaufschlagbare Lösekammer aufweist, sowie einem deren Verbindung mit dem Federspeichervorrat 7 kontrollierenden Relaisventil 10. Solange der Druck in der erwähnten Lösekammer größer als der oder gleich dem Lösedruck des Federspeicherbremszylinders 11 ist, bleibt letzterer in Lösestellung. Bei einem Druckabfall in der Lösekammer unter den Lösedruck entwickelt der Federspeicherbremszylinder 11 eine sich im wesentlichen umgekehrt proportional zum Druck in der Lösekammer verhaltende Zuspannkraft, die bei völliger Druckentlastung der Lösekammer ihren Höchstwert erreicht.

Federspeicherbremszylinder 11 und Betriebsbremszylinder 13 sind in bekannter Weise zu einer kombinierten Zylindereinheit 12 zusammengefaßt, können aber in ebenfalls bekannter Weise auch als selbständige Baueinheiten ausgebildet sein.

Das Relaisventil 10 ist zweikreisig über eine Federspeichersteuereinrichtung und eine Betriebsbremssteuereinrichtung ansteuerbar und als Überlastschutzventil ausgebildet. An seiner nicht näher bezeichneten Federspeichersteuereinrichtung ist das Relaisventil 10 über eine Steuerleitung 8, 9 mit dem Druck des Federspeichervorrats 7 beaufschlagbar. An seiner ebenfalls nicht näher bezeichneten Betriebsbremssteuereinrichtung wird das Relaisventil 10 bei Betätigung der Betriebsbremsanlage mit Betriebsbremsdruck beaufschlagt. Das Relaisventil 10 ist so ausgebildet, daß es bei gleichzeitiger Betätigung von Betriebsbremsanlage und Federspeicherbremsanlage eine Addition der vom Betriebsbremszylinder 13 und vom Federspeicherbremszylinder 11 erzeugten Zuspannkräfte und damit eine Überlastung mechanischer Bauteile der Bremsanlage verhindert. In nicht dargestellter, jedoch weitgehend üblicher Weise kann das Relaisventil 10 durch ein normales einkreisiges Relaisventil ersetzt werden, dessen einzige Steuereinrichtung dann über die Steuerleitung 8, 9 mit dem Druck des Federspeichervorrats 7 beaufschlagbar ist. Der Fachmann erkennt, daß in diesem Falle die Überlastschutzfunktion entfällt.

In der Steuerleitung 8, 9 ist eine Sperreinrichtung mit einem den Druck in der Vorratsleitung überwachenden Organ angeordnet, welche als vom Druck in der Vorratsleitung 1 gesteuertes Wegeventil 20 ausgebildet ist. Das Wegeventil 20 besitzt zu diesem Zweck eine Steuereinrichtung 21, die über eine Zuführung 2 mit der Vorratsleitung 1 stromaufwärts des Rückschlagventils 3 verbunden bzw. (im Hinblick auf das weiter unten beschriebene Löseventil 4) verbindbar ist. Das Wegeventil weist eine zweite Steuereinrichtung 19 auf, an der es mit dem Druck des Federspeichervorrats 7 beaufschlagt ist. In seiner in Fig. 1 eingenommenen Fahrtstellung ist das Wegeventil 20 für die Steuerleitung 8, 9 durchgängig. Aus dieser Fahrstellung wird das Wegeventil 20 bei Abfall des Drucks in der Vorratsleitung 1 auf einen vorbestimmten Wert in eine Sperrstellung umgesteuert, in welcher es die Steuerleitung 8, 9 sperrt und deren stromabwärts gelegenen Teil 9 und damit die Federspeichersteuereinrichtung des Relaisventils 10 druckentlastet.

Die Wirkungsweise der bisher beschriebenen Bestandteile des Ausführungsbeispiels sei nachstehend der Einfachheit halber an Hand eines Zahlenbeispiels erläutert. Der Nenndruck in der Vorratsleitung 1 und damit im wesentlichen im Druckmittel-Vorratssystem 5, 7 betrage 7,0 bar, der Lösedruck des Federspeicherbremszylinders 11 betrage 4,5 bar und der vorbestimmte Druck in der Vorratsleitung 1, bei dem das Wegeventil 20 in seine Sperrstellung geschaltet wird, betrage 3,0 bar.

Im normalen Fahrbetrieb steht in der Vorratsleitung 1, an der zugeordneten Steuereinrichtung 21 des Wegeventils 20, in der Zuführung 2 sowie im Betriebsbremsvorrat 5, Federspeichervorrat 7, Steuerleitung 8, 9 (damit auch an der Federspeichersteuereinrichtung des Relaisventils 10) und Lösekammer des Federspeicherbremszylinders 11 der Nenndruck von 7,0 bar an. In diesem Zustand sind das Wegeventil 20 in Fahrtstellung und der Betriebsbremszylinder 13 sowie der Federspeicherbremszylinder 11 gelöst.

Bei Ansteuerung der Betriebsbremsanlage über die Bremsleitung 18 werden der Betriebsbremszylinder 13 und die Betriebsbremssteuereinrichtung des Relaisventils 10 mit Betriebsbremsdruck beaufschlagt, ohne daß letzteres jedoch eine Betätigung der Federspeicherbremsanlage auslöst.

Tritt in der Vorratsleitung 1 bzw. in den ihr vorgeschalteten Komponenten des Zugfahrzeugs oder der Luftbeschaffungsanlage ein Defekt (z.B. Abreißen der Vorratsleitung) auf, der zu einem Druckabfall in der Vorratsleitung 1 führt, so wird der Betriebsbremsvorrat 5 von diesem Druckabfall durch das Rückschlagventil 3 getrennt. Setzt sich der Druckabfall in der Vorratsleitung 1 bis auf den vorbestimmten Wert von 3,0 bar (und darunter) fort, so werden das Wegeventil 20 in seine Sperrstellung geschaltet, dadurch die Steuerleitung 8, 9 gesperrt und deren Teil 9 entlüftet und dadurch der Federspeicherbremszylinder 11 von dem Relaisventil 10 zum Ansprechen gesteuert.

Entsprechend wirkt die Federspeicherbremsanlage, wenn der Druck in der Vorratsleitung 1 über eine Steuereinrichtung gewollt zwecks Feststellbremsung völlig oder zwecks Hilfsbremsung wenigstens auf den vorbestimmten Wert von 3,0 bar abgesenkt wird.

Der Druck im Betriebsbremsvorrat 5 fällt, abgesehen von Defekten, in erster Linie bei nicht ausreichender Nachspeisung durch die Vorratsleitung 1 infolge Luftverbrauchs bei Betätigung der Betriebsbremsanlage ab. Auch ein Druckabfall im Federspeichervorrat 7 infolge von Defekt oder Betätigung der Federspeicherbremsanlage überträgt sich durch das Rückschlagventil 6 auf den Betriebsbremsvorrat 5, während umgekehrt sich ein Druckabfall im Betriebsbremsvorrat 5 wegen der Sperrwirkung des Rückschlagventils 6 nicht auf den Federspeichervorrat 7 überträgt.

Ein Druckabfall im Betriebsbremsvorrat 5 hat einen im wesentlichen gleichen Druckabfall in der Vorratsleitung 1 und damit an der Steuereinrichtung 21 des Wegeventils 20 zur Folge, das das Rückschlagventil 3 die Vorratsleitung 1 gegen diesen Druckabfall nicht schützt.

Am häufigsten tritt ein Druckabfall im Betriebsbremsvorrat 5 bei Betätigung der Betriebsbremsanlage, insbesondere in längeren Regelphasen der Blockierschutzanlage 14, 15, auf. Ist der Druck des Betriebsbremsvorrats 5 (und damit in der Vorratsleitung 1) auf den vorbestimmten Wert von 3,0 bar abgefallen, wird das Wegeventil 20 in seine Sperrstellung geschaltet und dadurch auf dem bereits beschriebenen Wege der Federspeicherbremszylinder 11 zum Ansprechen gebracht. Ist allerdings in diesem Moment die Betriebsbremsanlage betätigt oder wird diese während des Ansprechens des Federspeicherbremszylinders 11 betätigt, so verhindert das Relaisventil 10 aufgrund seiner Überlastschutzfunktion eine Addition der von beiden erzeugten Zuspannkräfte, was je nach Ausbildung des Relaisventils 10 bedeuten kann, daß dieses für die Dauer der gleichzeitigen Betätigung beider Zylinder den Federspeicherbremszylinder 11 nur anteilig ansprechen läßt.

Aus der vorstehenden Funktionsbeschreibung folgt, daß durch die Erfindung das Ansprechen des Federspeicherbremszylinders 11 bis zu einem Druckabfall auf 3,0 bar im Betriebsbremsvorrat 5 verzögert wird, obwohl der Federspeicherbremszylinder 11 einen höheren Lösedruck von 4,5 bar aufweist. Da die Werte des Zahlenbeispiels auf den jeweiligen Einsatzfall abgestimmt werden können und müssen, ergibt sich aus dem Vorstehenden die Lehre, daß die Erfindung generell geeignet ist, das Ansprechen der Federspeicherbremsanlage bei hohem Luftverbrauch in der Betriebsbremsanlage praktisch zu beliebig hohen Druckabfallwerten zu verzögern und dadurch mit Sicherhiet das Eintreten kritischer Fahrzuständer de infolge selbsttätigen Ansprechens der Federspeicherbremsanlage zu vermeiden.

Im Ausführungsbeispiel ist in der Zuführung 2 das oben bereits erwähnte Löseventil 4 angeordnet. Dieses ist, wie dargestellt, mechanisch, beispielsweise von Hand, direkt betätigbar. Es kann aber auch in nicht dargestellter Weise, beispielsweise mechanisch oder durch Druckmittel, fernbetätigbar sein. Auch eine magnetgesteuerte Ausführung des Löseventils mit elektrischer Fernbetätigung ist möglich.

In dem in der Darstellung eingenommenen unbetätigten Zustand verbindet das Löseventil 4 die Zuführung 2 mit der Vorratsleitung 1 stromaufwärts des Rückschlagventils 3 und ermöglicht so die eben beschriebene Wirkungsweise des Ausführungsbeispiels.

Bei Betätigung trennt das Löseventil 4 die genannte Verbindung zwischen Zuführung 2 und Vorratsleitung 1 und verbindet unter Abdichtung der Verbindung zur Vorratsleitung 1 die Zuführung 2 mit dem Federspeichervorrat 7 bzw. einer der von diesem ausgehenden Leitungen, im Ausführungsbeispiel mit dem Teil 8 der Steuerleitung 8, 9. Bei betätigtem Löseventil 4 ist folglich die Steuereinrichtung 21 des Wegeventils 20 mit dem Druck des Federspeichervorrats 7 beaufschlagt und dadurch das Wegeventil 20 unabhängig von dem Druck in der Vorratsleitung 1 in seine Fahrtstellung geschaltet mit der Folge, daß auch der Federspeicherbremszlyinder 11 unabhängig von dem Druck in der Vorratsleitung 1 in Lösestellung gebracht bzw. gehalten wird.

Aufgrund seiner beschriebenen Wirkungsweise ermöglicht das Löseventil 4 auch bei auf und unter den vorbestimmten Wert abgefallenem Druck in der Vorratsleitung 1 ein Lösen des Federspeicherbremszylinders 11, wie es beispielsweise zum Manövrieren oder Abschleppen des Fahrzeugs erforderlich ist. Außerdem ermöglicht das Löseventil 4 eine Ausschaltung der weiter oben beschriebenen Wirkungen der Erfindung. Falls letzteres nicht gewünscht wird, können in bekannter Weise Vorkehrungen getroffen werden, die eine Betätigung des Löseventils 4 in bestimmten Betriebszuständen des Ausführungsbeispiels bzw. des Fahrzeugs, beispielsweise im Fahrbetrieb, ausschließen.

In nicht dargestellter Weise läßt sich das Ausführungsbeispiel auch ohne das Rückschlagventil 3 realisieren. In diesem Fall weisen Vorratsleitung und Druckmittelvorrat stets gleichen Druck bzw. gleichen Druckabfall auf. Eine derart vereinfachte Ausgestaltung hat zum Nachteil, daß die Wirkung der Erfindung mit Verzögerung einsetzt und daß das nach jedem Druckabfall in der Vorratsleitung 1 erforderliche Wiederauffüllen des Betriebsbremsvorrats die Wiederherstellung der Betriebsbereitschaft des Fahrzeugs verzögert und mit hohem Energie-Verbrauch einhergeht. Vorteilhaft ist bei der vereinfachten Ausgestaltung, daß sie durch den Fortfall des Rückschlagventils 3 kostengünstiger wird und eine mögliche Störquelle verliert.

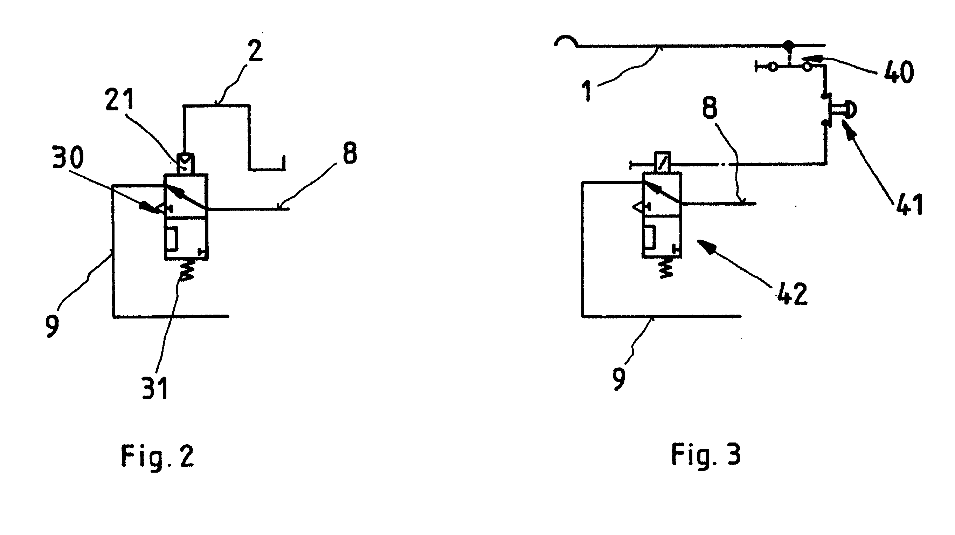

Fig. 2 zeigt als Ausschnitt einer Bremsanlage eine andere Ausführung des Wegeventils. Bei dem hier mit 30 bezeichneten Wegeventil erfolgt die Rückstellung in seine Fahrtstellung über eine Rückstellfeder 31 statt über die mit Druck des Federspeichervorrats beaufschlagte Steuereinrichtung 19 des vorigen Ausführungsbeispieles.

Im übrigen gilt für dieses Ausführungsbeispiel die Beschreibung des Ausführungsbeispiels nach Fig. 1 entsprechend.

Fig. 3 zeigt einen Ausschnitt aus einer Bremsanlage, in der die Sperreinrichtung mit einem den Druck in der Vorratsleitung überwachenden Organ als Magnetventil 42 ausgebildet ist, welches von einem an der Vorratsleitung 1 anliegenden Druckschalter 40 schaltbar ist. Das Löseventil ist in diesem Fall durch einen Löseschalter 41 ersetzt. Im übrigen ist auch dieses Ausführungsbeipiel wie das Ausführungsbeispiel nach Fig. 1 aufgebaut mit diesem gleich wirkend. Das bedeutet insbesondere, daß auch das Magnetventil 42 die Fahrtstellung und die Sperrstellung aufweist, in welch letztere es von dem Druckschalter 40 bei einem Abfall des Drucks in der Vorratsleitung 1 auf den vorbestimmten Wert geschaltet wird. Das Löseventil ist in diesem Fall durch den im Stromkreis von Druckschalter 40 und Magnetventil 42 angeordneten Löseschalter 41 ersetzt, der es ermöglicht, das Magnetventil 42 unabhängig von der Schaltstellung des Druckschalters 40 in seine Fahrtstellung zu schalten bzw. in dieser zu halten.

Es liegt auf der Hand, daß der Anwendungsbereich der Erfindung sich nicht in den dargestellten Ausführungsbeispielen erschöpft. Insbesondere gelten die vorstehend für eine pneumatische Bremsanlage gemachten Ausführungen auch für eine durch andere Druckmittel betätigte Bremsanlage (hydraulisch, andere Gase) entsprechend. Insbesondere erkennt der Fachmann auch, daß die vorstehend gemachten Ausführungen für Betriebs- und Federspeicherbremsanlagen mit mehreren Zylindern und/oder kombinierten Zylindereinheiten entsprechend gelten.

## Patentansprüche

1. Druckmittelbetätigte Bremsanlage eines Fahrzeugs, insbesondere Anhängerbremsanlage, mit einer Betriebsbremsanlage (13, 16, 17) und einer Federspeicherbremsanlage (10, 11), welche wenigstens einen Federspeicherbremszylinder (11) aufweist, mit einem Druckmittelvorrat für die Betriebsbremsanlage (13, 16, 17), nachstehend Betriebsbremsvorrat (5) genannt, und einem Druckmittelvorrat für die Federspeicherbremsanlage (10, 11), nachstehend Federspeichervorrat (7) genannt, welche über eine Vorratsleitung (1) gespeist werden, wobei die Federspeicherbremsanlage (10, 11) über ein Relaisventil (10) steuerbar ist, gekennzeichnet durch die Mermale:

a) Der Betriebsbremsvorrat (5) ist mit dem Federspeichervorrat (7) über eine eine Strömung aus dem Betriebsbremsvorrat (5) ermöglichende und eine Strömung in Gegenrichtung sperrende Vorrichtung (6) verbunden;

b) das Relaisventil (10) ist steuerseitig über eine Steuerleitung (8, 9) mit dem Druck des Federspeichervorrats (7) beaufschlagbar;

c) das Relaisventil (10) ist derart ausgebildet, daß es einen dem zugeführten Steuerdruck wenigstens im wesentlichen gleichen Druck aussteuert;

d) in der Steuerleitung (8, 9) ist eine Sperreinrichtung (20, 30, 42) mit einem Druck in der Vorratsleitung (1) überwachenden Organ angeordnet, welche bei Abfall dieses Drucks auf einen vorbestimmten Wert die Steuerleitung (8, 9) sperrt und deren stromabwärts der Sperreinrichtung (20, 30, 42) gelegenen Teil (9) druckentlastet.

2. Druckmittelbetätigte Bremsanlage nach Anspruch 1,
dadurch gekennzeichnet,
daß die Sperreinrichtung als vom Druck in der Vorratsleitung (1) gesteuertes Wegeventil (20, 30) ausgebildet ist, welches bei Abfall dieses Druckes auf den vorbestimmten Wert in eine Sperrstellung geschaltet wird.

3. Druckmittelbetätigte Bremsanlage nach Anspruch 2,
dadurch gekennzeichnet,
daß das Wegeventil (20) derart ausgebildet ist, daß es durch den über eine zweite Steuereinrichtung (19) zugeführten Druck des Federspeichervorrats (7) in eine Fahrtstellung rückgestellt wird.

4. Druckmittelbetätigte Bremsanlage nach Anspruch 2,
dadurch gekennzeichnet,
daß das Wegeventil (30) derart ausgebildet ist, daß es durch eine Feder (31) in eine Fahrtstellung rückgestellt wird.

5. Druckmittelbetätigte Bremsanlage nach Anspruch 1,
dadurch gekennzeichnet,
daß die Sperreinrichtung als von einem an der Vorratsleitung (1) anliegenden Druckschalter (40) schaltbares Magnetventil (42) ausgebildet ist.

6. Druckmittelbeätigte Bremsanlage nach einem der Ansprüche 2 bis 4,
dadurch gekennzeichnet,
daß in der Zuführung (2) des Drucks in der Vorratsleitung (1) zur zugeordneten Steuereinrichtung (21) des Wegeventils (20, 30) ein Löseventil (4) angeordnet ist, bei dessen Betätigung unabhängig von der Höhe des Drucks in der Vorratsleitung (1) die genannte Zuführung (2) gesperrt und die zugeordnete Steuereinrichtung (21) des Wegeventils (20, 30) mit dem Druck des Federspeichervorrats (7) beaufschlagt wird.

7. Druckmittelbetätigte Bremsanlage nach Anspruch 5,
dadurch gekennzeichnet,
daß im Stromkreis von Druckschalter (40) und Magnetventil (42) ein Löseschalter (41) angeordnet ist, bei dessen Betätigung unabhängig von der Höhe des Drucks in der Vorratsleitung (1) das Magnetventil (42) in Fahrtstellung geschaltet bzw. in derselben gehalten wird..

8. Druckmittelbetätigte Bremsanlage nach einem der Ansprüche 6 oder 7,
dadurch gekennzeichnet,
daß das Löseventil (4) bzw. der Löseschalter (41) mechanisch betätigbar sind.

9. Druckmittelbetätigte Bremsanlage nach einem der vorhergehenden Ansprüche,
dadurch gekennzeichnet,
daß das Löseventil bzw. der Löseschalter elektrisch und oder durch Druckmittel fernbetätigbar sind.

10. Druckmittelbetätigte Bremsanlage nach einem der vorhergehenden Ansprüche,
dadurch gekennzeichnet
, daß der Betriebsbremsanlage eine Blockierschutzanlage (14, 15) zugeordnet ist.

11. Druckmittelbetätigte Bremsanlage nach einem der vorhergehenden Ansprüche,
dadurch gekennzeichnet,
daß die Vorrichtung (6) als Rückschlagventil ausgebildet ist.

12. Druckmittelbetätigte Bremsanlage nach einem der Ansprüche 1 bis 10,
dadurch gekennzeichnet,
daß die eine Strömung aus dem Betriebsbremsvorrat (5) ermöglichende und eine Strömung in Gegenrichtung sperrende Vorrichtung (6) als Überströmventil ohne Rückströmung ausgebildet ist.

**Claims**

1. Pressure-medium-operated braking system for a vehicle, especially a trailer braking system, having a service braking system (13, 16, 17) and a spring braking system (10, 11), which has at least one spring brake cylinder (11), having a pressure-medium supply for the service braking system (13, 16, 17), referred to hereinafter as the service-brake supply (5), and a pressure-medium supply for the spring braking system (10, 11), referred to hereinafter as the spring-brake supply (7), which supplies are fed by way of a supply line (1), the spring braking system (10, 11) being controllable by way of a relay valve (10), characterised by the following features:

a) the service-brake supply (5) is connected to the spring-brake supply (7) by way of an apparatus (6) that allows flow out of the service-brake supply (5) and blocks flow in the opposite direction;

b) the relay valve (10) can be subjected on the control side by way of a control line (8, 9) to the pressure from the spring-brake supply (7);

c) the relay valve (10) is so constructed that it produces an output pressure that is at least substantially equal to the control pressure that is supplied;

d) arranged in the control line (8, 9) is a blocking device (20, 30, 42) having an element which monitors the pressure in the supply line (1) and which, when that pressure falls to a predetermined value, blocks the control line (8, 9) and removes the pressure from the portion (9) thereof that is downstream of the blocking device (20, 30, 42).

2. Pressure-medium-operated braking system according to claim 1, characterised in that the blocking device is in the form of a directional control valve (20, 30), controlled by the pressure in the supply line (1), which is switched to a blocking position when that pressure falls to the predetermined value.

3. Pressure-medium-operated braking system according to claim 2, characterised in that the directional control valve (20) is so constructed that it is restored to a travelling position by the pressure of the spring-brake supply (7) which is supplied by way of a second control device (19).

4. Pressure-medium-operated braking system according to claim 2, characterised in that the directional control valve (30) is so constructed that it is restored to a travelling position by a spring (31).

5. Pressure-medium-operated braking system according to claim 1, characterised in that the device is in the form of a solenoid valve (42) that can be switched by a pressure switch (40) adjacent to the supply line (1).

6. Pressure-medium-operated braking system according to any one of claims 2 to 4, characterised in that arranged in the supply line (2) for the pressure in the supply line (1) to the associated control device (21) of the directional control valve (20, 30) is a release valve (4) on the actuation of which, irrespective of the level of the pressure in the supply line (1), the mentioned supply line (2) is blocked and the associated control device (21) of the directional control valve (20, 30) is subjected to the pressure of the spring-brake supply (7).

7. Pressure-medium-operated braking system according to claim 5, characterised in that arranged in the circuit comprising the pressure switch (40) and the solenoid valve (42) is a release switch (41) on the actuation of which, irrespective of the level of the pressure in the supply line (1), the solenoid valve (42) is switched to, or held in, the travelling position.

8. Pressure-medium-operated braking system according to claim 6 or claim 7, characterised in that the release valve (4) and the release switch (41) can be actuated mechanically.

9. Pressure-medium-operated braking system according to any one of the preceding claims, characterised in that the release valve and the release switch can be remote-controlled electrically and/or by a pressure medium.

10. Pressure-medium-operated braking system according to any one of the preceding claims, characterised in that a blocking-protection system (14, 15) is associated with the service braking system.

11. Pressure-medium-operated braking system according to any one of the preceding claims, characterised in that the device (6), which permits flow out of the service-brake supply (5) and blocks flow in the opposite direction, is in the form of a non-return valve.

12. Pressure-medium-operated braking system according to any one of claims 1 to 10, characterised in that the device (6), which permits flow out of the service-brake supply (5) and blocks flow in the opposite direction, is in the form of an overflow valve without return flow.

## Revendications

1. Installation de freinage d'un véhicule automobile, notamment installation de freinage de remorque, actionnée par fluide de pression et comportant une installation de freinage de service (13, 16, 17) et une installation de freinage à accumulateur à ressort (10, 11) présentant au moins un cylindre de frein à accumulateur à ressort (11); une réserve de fluide de pression, ci-après appelée réserve de frein de service (5), pour l'installation de freinage de service (13, 16, 17); et une réserve de fluide de pression, ci-après appelée réserve d'accumulateur à ressort (7), pour l'installation de freinage à accumulateur à ressort (10, 11), lesquelles réserves sont alimentées par une conduite d'alimentation (1), l'installation de freinage à accumulateur à ressort (10, 11) pouvant être commandée par l'intermédiaire d'une valve-relais (10), caractérisée par les caractéristiques suivantes:

a) la réserve de frein de service (5) est reliée à la réserve d'accumulateur à ressort (7) par un dispositif (6) autorisant un écoulement venant de la réserve de frein de service (5) et bloquant un écoulement dans le sens inverse;

b) la valve-relais (10) peut être exposée, côté commande, par une conduite de commande (8, 9), à la pression de la réserve d'accumulateur à ressort (7);

c) la valve-relais (10) est réalisée de manière à fournir à sa sortie, sous l'effet de la commande, une

7

pression au moins sensiblement égale à la pression de commande appliquée;

d) sur la conduite de commande (8, 9) est agencé un dispositif de blocage (20, 30, 42) avec un organe surveillant la pression dans la conduite d'alimentation (1), dispositif qui, en cas de chute de cette pression à une valeur prédéterminée, bloque la conduite de commande (8, 9) et soulage, quant à la pression, la partie (9) de cette conduite de commande située en aval du dispositif de blocage (20, 30, 42).

2. Installation de freinage actionnée par fluide de pression selon revendication 1, caractérisée par le fait que le dispositif de blocage est réalisé en tant que vanne à plusieurs voies (20, 30) commandée par la pression dans la conduite d'alimentation (1), vanne qui, en cas de chute de cette pression à la valeur prédéterminée, est mise à une position de blocage.

3. Installation de freinage actionnée par fluide de pression selon revendication 2, caractérisée par le fait que la vanne à plusieurs voies (20) est constituée de manière à être ramenée à une position correspondant à la marche, par la pression de la réserve d'accumulateur à ressort (7) amenée par l'intermédiaire d'un deuxième dispositif de commande (19).

4. Installation de freinage actionnée par fluide de pression selon revendication 2, caractérisée par le fait que la vanne à plusieurs voies (30) est constituée de manière à être ramenée à une position correspondant à la marche, par un ressort (31).

5. Installation de freinage actionnée par fluide de pression selon revendication 1, caractérisée par le fait que le dispositif de blocage est constitué par une électrovanne (42) pouvant être commandée par un interrupteur manométrique (40) attenant à la conduite d'alimentation (1).

6. Installation de freinage actionnée par fluide de pression selon l'une des revendications 2 à 4, caractérisée par le fait que, sur l'arrivée (2) amenant la pression de la conduite d'alimentation (1) au dispositif de commande conjugué (21) de la vanne à plusieurs voies (20, 30), est agencée une valve de desserrage (4) dont l'actionnement, indépendamment du niveau de la pression dans la conduite d'alimentation (1), bloque ladite arrivée (2) et expose le dispositif de commande conjugué (21) de la vanne à plusieurs voies (20, 30) à la pression de la réserve d'accumulateur à ressort (7).

7. Installation de freinage actionnée par fluide de pression selon revendication 5, caractérisée par le fait qu'un interrupteur de desserrage (41) est agencé dans le circuit de courant de l'interrupteur manométrique (40) et de l'électrovanne (42), l'actionnement de cet interrupteur de desserrage, indépendamment du niveau de la pression dans la conduite d'alimentation (1), ayant pour effet que l'électrovanne (42) est mise ou maintenue à la position correspondant à la marche.

8. Installation de freinage actionnée par fluide de pression selon l'une des revendications 6 ou 7, caractérisée par le fait que la valve de desserrage (4) ou l'interrupteur de desserrage (41) est actionnable mécaniquement.

9. Installation de freinage actionnée par fluide de pression selon l'une des revendications précédentes, caractérisée par le fait que la valve de desserrage ou l'interrupteur de desserrage est actionnable à distance, électriquement et/ou par des moyens de pression.

10. Installation de freinage actionnée par fluide de pression selon l'une des revendications précédentes, caractérisée par le fait qu'une installation de protection contre le blocage (14, 15) est associée à l'installation de freinage de service.

11. Installation de freinage actionnée par fluide de pression selon l'une des revendications précédentes, caractérisée par le fait que le dispositif (6), autorisant un écoulement venant de la réserve de frein de service (5) et interdisant un écoulement dans le sens inverse, est réalisé en tant que soupape de retenue.

12. Installation de freinage actionnée par fluide de pression selon l'une des revendications 1 à 10, caractérisée par le fait que le dispositif (6), autorisant un écoulement venant de la réserve de frein de service (5) et interdisant un écoulement dans le sens inverse, est réalisé en tant que valve de barrage sans reflux.

Fig. 1

EP 0 218 045 B1

Fig. 3

Fig. 2